# EUROPÄISCHE PATENTSCHRIFT

(11) **EP 2 100 688 B1**
(45) Veröffentlichungstag und Bekanntmachung des Hinweises auf die Patenterteilung: **07.11.2012**
(21) Anmeldenummer: 09151291.3
(22) Anmeldetag: 26.01.2009
(51) Int. Cl.: B23K 20/12, C22F 1/043, F02F 1/24

(54) **Verfahren zur Herstellung von Zylinderköpfen für Verbrennungsmotoren**
Method for manufacturing cylinder heads for combustion engines
Procédé de fabrication de têtes de cylindre pour moteurs à combustion interne

(30) Priorität: 05.03.2008 DE 102008012653
(43) Veröffentlichungstag der Anmeldung: 16.09.2009
(73) Patentinhaber: Honsel AG, 59872 Meschede (DE)
(72) Erfinder: Pithan, Ansgar, 59872, Meschede (DE)
(74) Vertreter: Christophersen, Ulrich Rudolf

(56) Entgegenhaltungen:
- EP-A- 1 160 029
- JP-A- 10 183 316
- US-A1- 2004 074 948
- MISHRA R S ET AL: "Friction stir welding and processing" MATERIALS SCIENCE AND ENGINEERING R: REPORTS, ELSEVIER SEQUOIA S.A., LAUSANNE, CH, Bd. 50, Nr. 1-2, 31. August 2005 (2005-08-31), Seiten 1-78, XP025316190 ISSN: 0927-796X [gefunden am 2005-08-31]

## Beschreibung

Die Erfindung betrifft ein Verfahren zur Herstellung von Zylinderköpfen für Verbrennungsmotoren aus im Kokillenguss geformten Al-Si-Legierungen, bei dem mindestens eine thermisch und/oder mechanisch besonders beanspruchte Materialzone des Gussteils einer die Gefügestruktur beeinflussenden Nachbehandlung unterzogen wird, bei der die Materialzone durch Reibrühren mittels eines rotierenden Stiftes behandelt wird, der quer zu seiner Rotationsachse durch die Materialzone hindurch bewegt wird, wobei die Bewegung des rotierenden Stiftes entlang einer offenen oder geschlossenen Schlaufe um eine in dem Gussteil ausgebildete Öffnung herum erfolgt, und die Wandung der Öffnung während der Nachbehandlung durch ein mechanisches Widerlager abgestützt wird.

Bei der Entwicklung von Verbrennungsmotoren ist es das Bestreben der Motorenentwickler, die Beanspruchbarkeit der Zylinderköpfe von Ottomotoren und mehr noch von Dieselmotoren weiter zu erhöhen. Dies erfolgt einerseits durch Entwicklung angepasster Bauteilgeometrien, d. h. durch Veränderungen der Gestalt, der Festigkeit oder der Kühlmöglichkeit über Kühlkanäle, und andererseits durch den Einsatz verbesserter Werkstoffe und Fertigungsverfahren. Die besondere Belastungssituation bei Zylinderköpfen beruht darauf, dass die dort auftretenden Betriebslasten nicht nur statischer, sondern vor allem zyklischer Art sind. Die zyklische Ermüdung beruht einerseits auf den vor allem beim Diesel immer weiter gesteigerten Verbrennungsdrücken. Zum anderen beruht sie auf den niederfrequent alternierenden thermischen Spannungen in Abhängigkeit von den wechselnden Leistungsabfragen des Motors, d. h. bei den Betriebszuständen Volllast / Teillast / Schub /Motorstillstand. Insgesamt setzt sich daher die tatsächliche Beanspruchung eines Zylinderkopfes aus einer Kombination der statischen Grundlasten, z. B. der Eigenspannung im Zylinderkopf oder den Schraubenkräften, und den diesen überlagerten, zyklischen Beanspruchungen zusammen.

Wegen der guten Gießbarkeit, der hohen Wärmeleitfähigkeit und der guten Zerspanbarkeit werden Zylinderköpfe für moderne Pkw-Motoren bis auf wenige Ausnahmen aus Legierungen auf Aluminiumbasis gefertigt. Hier sind insbesondere die Werkstoffe AlSi8Cu3, AlSi6Cu4, AlSi10Mg(Cu) und AlSi7Mg(Cu) zu nennen. Das Gießen erfolgt überwiegend im Schwerkraft-Kokillenguss. Eine zahlenmäßig geringere Bedeutung haben der Sandguss, der Niederdruck-Kokillenguss sowie der Lost-Foam-Guss.

In der Praxis kommt es gerade im Bereich der Ein- und Auslassventile des Brennraums eines Zylinderkopfes infolge der dort noch einmal gesteigerten thermischen und dynamischen Belastungen zu Belastungsspitzen, weshalb weitergehende werkstofftechnische Maßnahmen angestrebt werden. Ziel ist eine erhöhte Gefügefeinheit, deren Maß regelmäßig über den so genannten Dendritenarmabstand (DAS) bewertet und gemessen wird. Im Rahmen der für Al-Si-Legierungen angewendeten Gießverfahren lassen sich diese Dendritenarmabstände nur bis zu einer unteren Grenze von ca. 15 - 20 µm verringern. Zugleich haben Untersuchungen ergeben, dass vor allem die Dauerfestigkeit derartiger Aluminiumwerkstoffe auch in höheren Temperaturbereichen durch Verringerung des Dendritenarmabstandes positiv beeinflusst wird.

Aus der US 2004/0074948 A1 und der EP 1 160 029 A1 sind bereits Verfahren zur Behandlung von Zylinderköpfen von Verbrennungsmotoren bekannt, bei denen besonders beanspruchte Bereiche des Zylinderkopfes einer Nachbehandlung durch Reibrühren mittels eines rotierenden Stiftes unterzogen werden. Auf diese Weise wird in diesen Bereichen ein feines Gefüge erzielt, welches sowohl hohe statische, als auch hohe dynamische Festigkeiten aufweist. Ferner werden durch das Reibrühren innere Spannungen in den beim Reibrühren durchlaufenen Materialbereichen abgebaut.

Mit der Erfindung angestrebt werden Maßnahmen zur Steigerung der Gefügefeinheit in jenen Bereichen des Zylinderkopfes, in denen die höchsten dynamischen und thermischen Belastungen auftreten. Die Maßnahmen sollen sich insbesondere bei Zylinderköpfen für den Einsatz in aufgeladenen Dieselmotoren eignen.

Zur **Lösung** wird ein Verfahren mit den Merkmalen des Anspruchs 1 vorgeschlagen.

Durch Anwendung dieses Verfahrens lässt sich in der behandelten Materialzone des Zylinderkopfes ein sehr feines Gefüge erzielen, welches sowohl hohe statische, als auch hohe dynamische Festigkeiten aufweist, bei zugleich hohen Bruchdehnungen. Durch das Reibrühren werden auch innere Spannungen in der behandelten Materialzone abgebaut. Da die Bewegung des beim Reibrühren eingesetzten, rotierenden Stiftes entlang einer offenen oder geschlossenen Schlaufe um die in dem Gussteil ausgebildete Öffnung herum erfolgt, ergeben sich Vorteile insbesondere im Bereich um die Ventilöffnungen des Zylinderkopfes herum, da in dieser Zone die höchsten dynamischen und thermischen Belastungen auftreten, insbesondere bei Zylinderköpfen für den Einsatz in aufgeladenen Dieselmotoren. Von zusätzlichem Vorteil ist, dass die Wandung der Öffnung bzw. Ventilöffnung während der Nachbehandlung von innen her durch ein mechanisches Widerlager abgestützt wird, um so am Rand der Öffnung einen Materialversatz oder eine Materialverlagerung zu verhindern.

Im Hinblick auf die beim Reibrühren erheblichen mechanischen Kräfte kann es von Vorteil sein, wenn das Widerlager außer über die Öffnung selbst über mindestens eine weitere Verbindung starr gegenüber dem Gussteil abgestützt ist.

Die Technik des Reibrührens ist grundsätzlich aus der Verbindungstechnik bekannt, und wird dort auch als Reibrührschweißen bezeichnet. Eine Darstellung findet sich zum Beispiel in der EP 1 716 959 A2 und der EP 1 285 707 B1.

Mit einer anderen Ausgestaltung des Verfahrens wird vorgeschlagen, dass der Endort, und vorzugsweise auch der Startort, der Querbewegung des rotierenden Stiftes in einer weiteren Öffnung liegt, wobei diese weitere Öffnung benachbart zu der Öffnung in der bearbeiteten Materialzone angeordnet ist. Diese weitere Öffnung kann z. B. die Montageöffnung für eine Diesel-Einspritzdüse sein und damit eine solche Öffnung, welche im Anschluss an das Reibrühren ohnehin in einem nachfolgenden Fertigungsschritt spanend bearbeitet oder nachbearbeitet werden muss.

Ein Ausführungsbeispiel des erfindungsgemäßen Verfahrens wird nachfolgend beschrieben, wobei auch auf die Zeichnungen Bezug genommen wird. Darin zeigen:
- Fig. 1: in Draufsicht einen aus einer Aluminiumlegierung gegossenen Zylinderkopf für einen Diesel-Verbrennungsmotor und
- Fig. 2: einen Schnitt durch den Zylinderkopf nach Fig. 1 in der dort eingezeichneten Schnittebene II - II, ferner eine Werkstückaufnahme, in welche der Zylinderkopf starr eingespannt ist, sowie ein Reibrührwerkzeug.

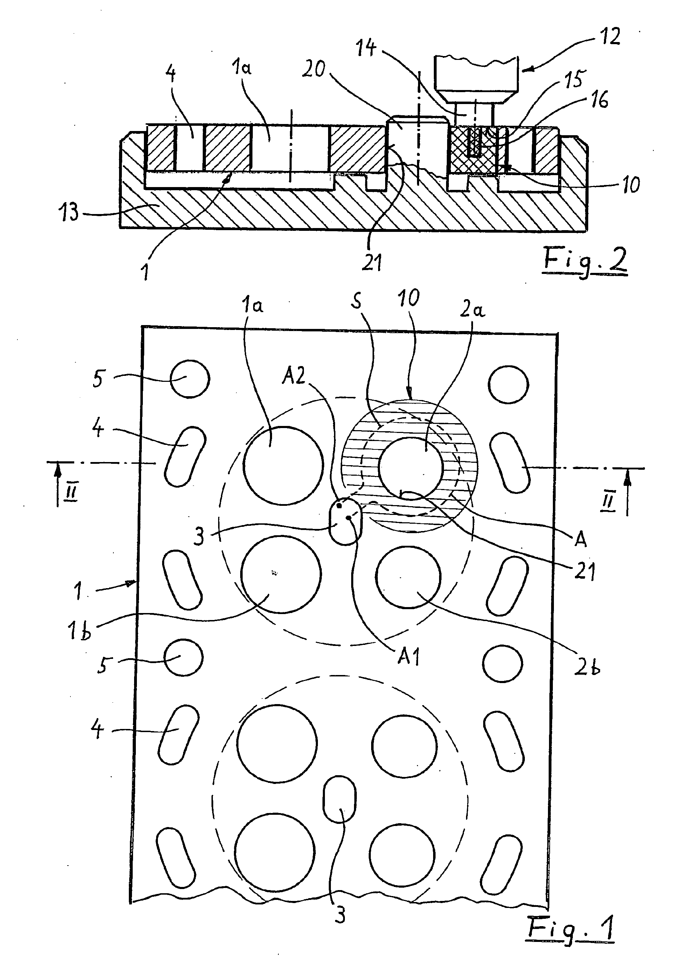

Der in Fig. 1 dargestellte Zylinderkopf kann aus einer aushärtbaren Al-Si-Cu-Legierung oder einer Al-Si-Mg-Legierung bestehen, wobei die Herstellung des Gussteils durch Schwerkraft-Kokillengießen erfolgt, oder alternativ durch Vergießen im Sandguss, im Niederdruck-Kokillenguss oder im Lost-Foam-Guss. Geeignete Aluminiumwerkstoffe sind AISi8Cu3, AISi6Cu4, AlSi10Mg(Cu) oder AlSi7Mg(Cu). In dem Zylinderkopf befinden sich für jeden Zylinder der Verbrennungskraftmaschine ein oder zwei Öffnungen 1a, 1b für die Einlassventile, ein oder zwei Öffnungen 2a, 2b für die Auslassventile sowie eine zentral in deren Mitte angeordnete Öffnung 3. Diese dient als Montageöffnung für die Diesel-Einspritzdüse, wozu die Öffnung 3 in einem späteren Fertigungsschritt mit einem Einschraubgewinde versehen wird. Ferner befinden sich in dem Zylinderkopf 1 verschiedene Kühlöffnungen 4 für die Kühlflüssigkeit, sowie Öffnungen 5 für Verschraubungen mit dem Motorblock.

Im Betrieb des Verbrennungsmotors besonders belastet sind ringförmige Materialzonen 10 rund um die Öffnungen 1a, 1b, 2a, 2b für die Einlass- und Auslassventile. In diesen Materialzonen 10 wird eine Verfeinerung des Werkstoffgefüges erreicht, indem diese Bereiche durch Reibrühren behandelt werden. Bei diesem Verfahren wird ein rotierender Stift, der aus einer zylindrischen Schulter herausragt, mit großer Kraft gegen die Oberfläche des Gussteils gedrückt, und entlang eines vorgegebenen Weges durch den Werkstoff geführt. Hierbei erwärmt sich der Werkstoff durch die sehr starke Reibung zwischen der Schulter des Werkzeuges und der Gussteiloberfläche, zugleich wird der Werkstoff durch die Rotation des Stiftes verrührt mit der Folge einer erheblichen Verfeinerung des Werkstoffgefüges in der betreffenden Zone. Beleg für diese Verfeinerung ist der dort deutlich reduzierte Wert des Dendritenarmabstandes (DAS).

In Fig. 1 ist jener Weg A gestrichelt eingezeichnet, den der rotierende Stift um die Öffnung 2a herum nimmt, um die um diese Öffnung herum angeordnete Materialzone 10 zu behandeln. Sowohl der Anfangsort A1, als auch der Endort A2 des Weges A befindet sich vorzugsweise in jener Öffnung 3 des Zylinderkopfes 1, welche später, nach entsprechender spanender Bearbeitung, als Montageöffnung für die Diesel-Einspritzdüse dient. Insgesamt wird der rotierende Stiftes entlang eines Weges A geführt, der die Gestalt einer offenen oder geschlossenen Schlaufe S um die Öffnung 2a herum zeigt. Da die Bewegung des rotierenden Stiftes in der Öffnung 3 endet, verbleibt nach dem Abschluss des Reibrührens und dem Herausziehen des rotierenden Stiftes aus dem Gussteil 1 keine zusätzliche Öffnung, die dann in einem weiteren Verfahrensschritt verschlossen werden müsste.

Fig. 2 zeigt die Durchführung des Reibführens einschließlich des Reibrührwerkzeuges 12 und einer Werkstückaufnahme 13 für das Gussteil, d. h. den Zylinderkopf 1. Das Reibrührwerkzeug 12 besteht aus einem rotierenden Reibzylinder 14 mit an dessen Unterseite angeordneter, ringförmiger Reibfläche 15, sowie aus dem drehfest mit dem Reibzylinder 14 verbundenen rotierenden Stift 16. Bei der Verfahrensdurchführung befindet sich der rotierende Stift 16 auf seiner ganzen Länge in dem zu verrührenden Gussmaterial, wohingegen durch die auf die Gussteiloberseite gepresste Reibfläche 15 des Reibzylinders 14 das Material erhitzt wird. Der rotierenden Bewegung des rotierenden Stiftes 16 überlagert ist dessen Bewegung durch die Materialzone 10 hindurch, welche Bewegung daher quer zur Rotationsachse des Stifts 16 erfolgt.

Die Werkstückaufnahme 13 dient vor allem dazu, den Zylinderkopf 1 von mindestens zwei Seiten her einzuspannen, und gegenüber den beim Reibrühren erheblichen mechanischen Kräften zu fixieren. Zusätzlich ist an der Werkstückaufnahme 13 ein Widerlager 20 starr angeordnet. Bei dem Widerlager 20 handelt es sich um einen starren Dorn, welcher von innen her spielfrei die Wandung 21 der Öffnung 2a stützt, und auf diese Weise die Kontur dieser Öffnung gegenüber den beim Reibrühren wirkenden, erheblichen Verformungskräften stabilisiert.

### Bezugszeichen

- 1: Gussteil, Zylinderkopf
- 1a: Öffnung für Einlassventil
- 1 b: Öffnung für Einlassventil
- 2a: Öffnung für Auslassventil
- 2b: Öffnung für Auslassventil
- 3: Öffnung, Montageöffnung
- 4: Kühlöffnung
- 5: Öffnung für Verschraubung
- 10: bearbeitete Materialzone
- 12: Reibrührwerkzeug
- 13: Werkstückaufnahme
- 14: Reibzylinder
- 15: ringförmige Reibfläche
- 16: rotierender Stift
- 20: Widerlager
- 21: Wandung

- A: Weg
- A1: Anfangsort
- A2: Endort
- S: Schlaufe

## Patentansprüche

1. Verfahren zur Herstellung von Zylinderköpfen für Verbrennungsmotoren aus im Kokillenguss geformten Al-Si-Legierungen, bei dem mindestens eine thermisch und/oder mechanisch besonders beanspruchte Materialzone (10) des Gussteils (1) einer die Gefügestruktur beeinflussenden Nachbehandlung unterzogen wird, bei der die Materialzone (10) durch Reibrühren mittels eines rotierenden Stiftes (16) behandelt wird, der quer zu seiner Rotationsachse durch die Materialzone (10) hindurchbewegt wird, wobei die Bewegung des rotierenden Stiftes (16) entlang einer offenen oder geschlossenen Schlaufe (S) um eine in dem Gussteil (1) ausgebildete Öffnung (2a) herum erfolgt, und die Wandung (21) der Öffnung (2a) während der Nachbehandlung durch ein mechanisches Widerlager (20) abgestützt wird, **dadurch gekennzeichnet, dass** das Widerlager (20) ein starrer Dorn ist, der von innen her spielfrei die Wandung (21) stützt.

2. Verfahren nach Anspruch 1, **dadurch gekennzeichnet, dass** das Widerlager (20) außer über die Öffnung (2a) selbst über mindestens eine weitere Verbindung starr gegenüber dem Gussteil (1) abgestützt ist.

3. Verfahren nach einem der Ansprüche 1 oder 2, **dadurch gekennzeichnet, dass** die Öffnung (2a) eine Ventilöffnung des Zylinderkopfes ist.

4. Verfahren nach einem der Ansprüche 1 bis 3, **dadurch gekennzeichnet, dass** der Endort (A2) der Querbewegung des rotierenden Stiftes (16) in einer weiteren Öffnung (3) liegt, die benachbart zu der Öffnung (2a) angeordnet ist.

5. Verfahren nach Anspruch 4, **dadurch gekennzeichnet, dass** auch der Startort (A1) der Querbewegung des rotierenden Stiftes (16) in der weiteren Öffnung (3) liegt.

6. Verfahren nach Anspruch 4 oder 5, **dadurch gekennzeichnet, dass** die weitere Öffnung (3) in einem nachfolgenden Fertigungsschritt spanend bearbeitet wird.

7. Verfahren nach einem der Ansprüche 4 - 6, **dadurch gekennzeichnet, dass** die weitere Öffnung (3) die Montageöffnung für eine Diesel-Einspritzdüse ist.

## Claims

1. A method of producing cylinder heads for internal-combustion engines from Al-Si alloys shaped in permanent mould casting, in which at least one zone (10) of material of the casting (1) stressed to a particular degree thermally and/or mechanically is subjected to an after-treatment which influences the structure, in which the zone (10) of material is treated by friction stirring by means of a rotating pin (16) which is moved through the zone (10) of material transversely to its axis of rotation, wherein the movement of the rotating pin (16) takes place along an open or closed loop (S) about an opening (2a) formed in the casting (1), and the wall (21) of the opening (2a) is supported during the after-treatment by a mechanical abutment (20), **characterized in that** the abutment (20) is a rigid mandrel which supports the wall (21) without clearance from the inside.

2. A method according to Claim 1, **characterized in that** the abutment (20) is supported in a rigid manner with respect to the casting (1) by way of at least one further connection apart from above the opening (2a) itself.

3. A method according to one of Claims 1 or 2, **characterized in that** the opening (2a) is a valve opening of the cylinder head.

4. A method according to any one of Claims 1 to 3, **characterized in that** the end point (A2) of the transverse movement of the rotating pin (16) lies in a further opening (3) which is situated adjacent to the opening (2a).

5. A method according to Claim 4, **characterized in that** the starting point (A1) of the transverse movement of the rotating pin (16) also lies in the further opening (3).

6. A method according to Claim 4 or 5, **characterized in that** the further opening (3) is machined by cutting in a subsequent manufacturing step.

7. A method according to any one of Claims 4 to 6, **characterized in that** the further opening (3) is the installation opening for a diesel injection nozzle.

## Revendications

1. Procédé pour fabriquer des culasses de cylindre pour des moteurs à combustion à base d'alliage Al-Si formés dans le moulage en coquille, dans lequel au moins une zone de matériau (10) particulièrement sollicitée thermiquement et/ou mécaniquement, de la partie coulée (1) est soumise à un traitement ultérieur influençant la structure de texture, traitement lors duquel la zone de matériau (10) est traitée par malaxage avec frottement au moyen d'une broche (16) rotative, laquelle est déplacée à travers la zone de matériau (10) transversalement à son axe de rotation, le déplacement de la broche (16) rotative s'effectuant le long d'une boucle (S) ouverte ou fermée autour d'une ouverture (2a) formée dans la partie coulée (1) et la paroi (21) de l'ouverture (2a) étant soutenue pendant le traitement complémentaire par une contrebutée (20) mécanique, **caractérisé en ce que** la contrebutée (20) est un mandrin rigide qui soutient la paroi (21) sans jeu par l'intérieur.

2. Procédé selon la revendication 1, **caractérisé en ce que** la contrebutée (20) est soutenue, outre par l'ouverture (2a) même, par au moins une autre liaison de façon rigide par rapport à la partie coulée (1).

3. Procédé selon l'une des revendications 1 ou 2, **caractérisé en ce que** l'ouverture (2a) est une ouverture de vanne de la culasse de cylindre.

4. Procédé selon l'une des revendications 1 à 3, **caractérisé en ce que** le lieu terminal (A2) du mouvement transversal de la broche (16) rotative se situe dans une autre ouverture (3) qui est disposée à proximité de l'ouverture (2a).

5. Procédé selon la revendication 4, **caractérisé en ce qu'**également le lieu de démarrage (A1) du mouvement transversal de la broche (16) rotative se situe dans l'autre ouverture (3).

6. Procédé selon la revendication 4 ou 5, **caractérisé en ce que** l'autre ouverture (3) est traitée par enlèvement de copeaux lors d'une étape de fabrication consécutive.

7. Procédé selon l'une des revendications 4 à 6, **caractérisé en ce que** l'autre ouverture (3) est l'ouverture de montage pour une buse d'injection de diesel.
